# EUROPÄISCHE PATENTANMELDUNG

(11) **EP 2 447 714 A1**
(43) Veröffentlichungstag der Anmeldung: **02.05.2012**
(21) Anmeldenummer: 10189177.8
(22) Anmeldetag: 28.10.2010
(51) Int. Cl.: G01N 29/22, G01N 29/265, G01N 29/24

(54) **Automatische prüfkopfpositionsabhängige Einschallwinkelverstellung für Ultraschallprüfköpfe**

(71) Anmelder: Siemens Aktiengesellschaft, 80333 München (DE)
(72) Erfinder: Clossen-von Lanken Schulz, Michael, 47661 Issum (DE); Obermayr, Stefan, 45475 Mülheim (DE)

(57) **Zusammenfassung**

Es wird eine Vorrichtung zur Ultraschallprüfung (5) eines Bauteils (1) beschrieben, die mindestens einen Ultraschallprüfkopf (11) und eine Führungseinheit (8) umfasst. Die Führungseinheit (8) ist so ausgestaltet, dass der Prüfkopf (11) in mindestens einer Translationsrichtung (12) kontinuierlich bewegt werden kann, wobei sich gleichzeitig kontinuierlich der Einschallwinkel des Prüfkopfes (11) in Bezug auf die Oberfläche (6) des Bauteils (1) verändert.

## Beschreibung

Die vorliegende Erfindung betrifft eine Vorrichtung zur Ultraschallprüfung eines Bauteils und eine Verwendung einer solchen Vorrichtung. Weiterhin betrifft die Erfindung ein Verfahren zur Ultraschallprüfung eines Bauteils.

Im Rahmen zahlreicher technischer Anwendungen werden Bauteile einer Ultraschallprüfung unterzogen, um die Qualität der Bauteile oder deren Verschleiß oder deren betrieblichen Beanspruchungen zu beurteilen. Beispielsweise werden Dampfturbinenschaufeln im eingebauten Zustand auf Anrisse im nicht zugänglichen Schaufelfuß geprüft.

Bei der Ultraschallprüfung komplexer Geometrien, zum Beispiel der Schaufelfüße vom Schaufelblatt aus, ist eine gleichbleibende, lotrechte Einschallung auf den Fehlererwartungsbereich bei gleichbleibenden Schallwegen nur schwer realisierbar. Wenn die Oberfläche, auf der der Prüfkopf läuft, vollkommen anders gekrümmt ist als die Prüfoberfläche, ist es mitunter erforderlich, die Prüfkopfposition sowie den Einschall- oder Schielwinkel des Prüfkopfes entlang der Prüfbahn kontinuierlich und unabhängig voneinander zu verändern.

Bislang musste entweder mit hohen Empfindlichkeitseinbußen und stark eingeschränktem Prüfbereich geprüft werden oder es wurden Formstücke gebaut, die alle möglichen Einschallpositionen und Schielwinkel über diskrete Prüfkopfpositionen realisierten. Dies machte jedoch einen Umbau des Prüfkopfes von einer Position zur nächsten notwendig und war daher mit erheblichem Zeitaufwand verbunden. Zudem wurden die Bereiche zwischen den diskreten Positionen nicht mit gleich hoher Empfindlichkeit geprüft.

Es ist daher eine erste Aufgabe der vorliegenden Erfindung, eine verbesserte Vorrichtung zur Ultraschallprüfung eines

Bauteils zur Verfügung zu stellen. Eine zweite Aufgabe der vorliegenden Erfindung besteht darin, eine Verwendung der verbesserten Vorrichtung zur Ultraschallprüfung zur Verfügung zu stellen. Eine dritte Aufgabe der vorliegenden Erfindung besteht darin, ein vorteilhaftes Verfahren zur Ultraschallprüfung einer Oberfläche eines Bauteils zur Verfügung zu stellen.

Die erste Aufgabe wird durch eine Vorrichtung zur Ultraschallprüfung eines Bauteils nach Anspruch 1 gelöst. Die zweite Aufgabe wird durch eine Verwendung nach Anspruch 8 gelöst. Die dritte Aufgabe wird durch ein Verfahren zur Ultraschallprüfung nach Anspruch 11 gelöst. Die abhängigen Ansprüche enthalten weitere vorteilhafte Ausgestaltungen der Erfindung.

Die erfindungsgemäße Vorrichtung zur Ultraschallprüfung eines Bauteils umfasst mindestens einen Ultraschallprüfkopf und eine Führungseinheit. Das Bauteil umfasst eine Oberfläche. Die Führungseinheit ist so ausgestaltet, dass der Prüfkopf in mindestens einer Translationsrichtung kontinuierlich bewegt werden kann. Dabei ist die Führungseinheit so ausgestaltet, dass sich gleichzeitig kontinuierlich der Einschallwinkel, auch Schielwinkel genannt, des Prüfkopfes in Bezug auf die Oberfläche des Bauteils verändert. Insbesondere kann die Führungseinheit so ausgestaltet sein, dass sich während der kontinuierlichen Bewegung in mindestens einer Translationsrichtung gleichzeitig kontinuierlich der Schielwinkel des Prüfkopfes entsprechend des Lotes seines Schallbündels auf die zu prüfende Oberfläche des Bauteils verändert.

Unter dem Einschall- oder Schielwinkel in Bezug auf eine Oberfläche wird im Zusammenhang mit der vorliegenden Erfindung der Winkel zwischen der Flächennormale der Oberfläche und der Ausbreitungsrichtung des Schallbündels verstanden.

Vorzugsweise kann die Führungseinheit so ausgestaltet sein, dass der Prüfkopf in Translationsrichtung entlang der Oberfläche des Bauteils kontinuierlich bewegt werden kann. Vorteilhafterweise umfasst die Führungseinheit mindestens eine Führungsschiene, an welcher der Prüfkopf kontinuierlich entlang bewegt werden kann. Insbesondere kann die Führungseinheit mindestens einen Führungsschlitten umfassen, an welchem der Prüfkopf befestigt werden kann oder befestigt ist. Vorteilhafterweise kann die Führungseinheit so ausgestaltet sein, dass der Prüfkopf mit Hilfe des Führungsschlittens an der Führungsschiene entlang geführt werden kann.

Beispielsweise kann die Führungseinheit einen Käfig umfassen, innerhalb welchem der Prüfkopf und/oder der Führungsschlitten bewegt werden können/kann.

Mit Hilfe der erfindungsgemäßen Vorrichtung ist für jede Prüfkopfposition in Bezug auf die Führungseinheit ein bestimmter Schielwinkel vorgegeben. Damit lässt sich sowohl die Prüfkopfposition als auch der jeweilige Schielwinkel des Ultraschallprüfkopfes wegabhängig entlang einer Bahn geführt verstellen. Dadurch wird die Prüfung komplexer Bauteile, insbesondere komplexer Bauteile von Gas- oder Dampfturbinen, wie beispielsweise Dampfturbinenschaufeln, deutlich einfacher und erheblich schneller als es bislang möglich war.

Die Führungseinheit kann zum Beispiel ein erstes Führungselement und ein zweites Führungselement umfassen. Mit dem ersten Führungselement kann beispielsweise die Position des Prüfkopfes festgelegt werden. Mit dem zweiten Führungselement kann beispielsweise der Schielwinkel des Prüfkopfes festgelegt werden.

Vorteilhafterweise kann die Führungseinheit mindestens eine gekrümmte Führungsschiene und/oder mindestens ein gekrümmtes Führungselement umfassen. Das gekrümmte Führungselement oder die gekrümmte Führungsschiene kann beispielsweise konvex in Bezug auf die Prüfoberfläche ausgestaltet sein.

Die zuvor beschriebene erfindungsgemäße Vorrichtung wird erfindungsgemäß zur Ultraschallmessung an einer Turbinenkomponente verwendet. Eine solche erfindungsgemäße Verwendung kann sich beispielsweise dadurch auszeichnen, dass es sich bei der Turbinenkomponente um eine Dampfturbinenkomponente, beispielsweise eine Dampfturbinenschaufel oder einen Dampfturbinenschaufelfuß, handelt.

Im Rahmen des erfindungsgemäßen Verfahrens zur Ultraschallprüfung eines Bauteils wird ein Ultraschallprüfkopf in mindestens einer Translationsrichtung kontinuierlich bewegt. Gleichzeitig wird der Einschallwinkel oder Schielwinkel des Prüfkopfes in Bezug auf die Oberfläche des Bauteils kontinuierlich verändert. Vorteilhafterweise kann der Ultraschallprüfkopf in der Translationsrichtung entlang der Oberfläche des Bauteils bewegt werden.

Zum Beispiel kann während der kontinuierlichen Bewegung in Translationsrichtung gleichzeitig kontinuierlich der Schielwinkel des Prüfkopfes entsprechend des Lotes seines Schallbündels auf die zu prüfende Oberfläche des Bauteils verändert werden.

Insbesondere kann der Schielwinkel dadurch verändert werden, dass der Prüfkopf um eine Achse senkrecht zur Translationsrichtung gedreht wird. Grundsätzlich kann der Prüfkopf mit Hilfe eines Führungsschlittens auf mindestens einer Führungsschiene entlang geführt werden. Dazu kann der Prüfkopf an dem Führungsschlitten befestigt werden.

Die erfindungsgemäße Verwendung und das erfindungsgemäße Verfahren haben grundsätzlich dieselben Vorteile wie die erfindungsgemäße Vorrichtung zur Ultraschallprüfung.

Weitere Vorteile, Merkmale und Eigenschaften der vorliegenden Erfindung werden im Folgenden anhand eines Ausführungsbeispiels unter Bezugnahme auf die beigefügten Figuren näher beschrieben.
Figur 1 zeigt schematisch einen Teil einer Dampfturbinenschaufel mit einer Vorrichtung zur Ultraschallprüfung gemäß dem Stand der Technik in perspektivischer Ansicht.
Figur 2 zeigt schematisch einen Teil einer Dampfturbinenschaufel mit einer erfindungsgemäßen Vorrichtung zur Ultraschallprüfung in perspektivischer Ansicht.

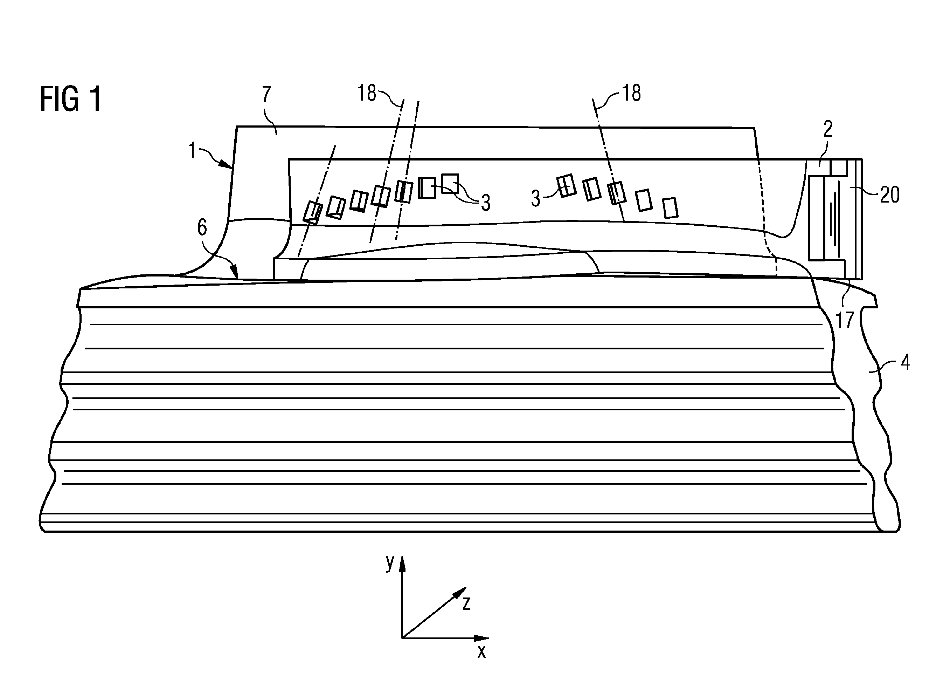

Die Figur 1 zeigt schematisch einen Teil einer Dampfturbinenschaufel 1. Die Dampfturbinenschaufel 1 umfasst ein Schaufelblatt 7 und einen Schaufelfuß 4. Das Schaufelblatt 7 schließt sich an den Schaufelfuß 4 an. Die in der Figur 1 zu überprüfende Oberfläche der Turbinenschaufel 1 ist mit der Bezugsziffer 6 gekennzeichnet.

Eine Vorrichtung zur Ultraschallprüfung 2 ist mit ihrer Unterseite 17 auf das Bauteil aufgelegt. Die Vorrichtung zur Ultraschallprüfung 2 umfasst eine Anzahl an Aussparungen 3, in welche jeweils ein Ultraschallprüfkopf eingesetzt werden kann. Die Aussparungen 3 unterscheiden sich dabei hinsichtlich ihrer Position in x-Richtung. Weiterhin umfasst jede Aussparung 3 eine Längsachse 18, die in der Figur 1 lediglich beispielhaft für einige Aussparungen 3 eingezeichnet ist. Die Aussparungen 3 unterscheiden sich neben ihrer Position in x-Richtung auch hinsichtlich der Ausrichtung ihrer jeweiligen Längsachse 18 in Bezug auf die zu überprüfende Oberfläche 6 beziehungsweise in Bezug auf die Unterseite 17 der Vorrichtung 2. Die Längsachse 18 der jeweiligen Aussparung 3 bestimmt den Schielwinkel des jeweils in die Aussparung eingesetzten Ultraschallprüfkopfes.

Mit Hilfe der in der Figur 1 gezeigten Vorrichtung zur Ultraschallprüfung 2 lassen sich lediglich diskrete Prüfkopfpositionen im Hinblick auf die Einschallposition in x-Richtung und den Einschall- oder Schielwinkel realisieren.

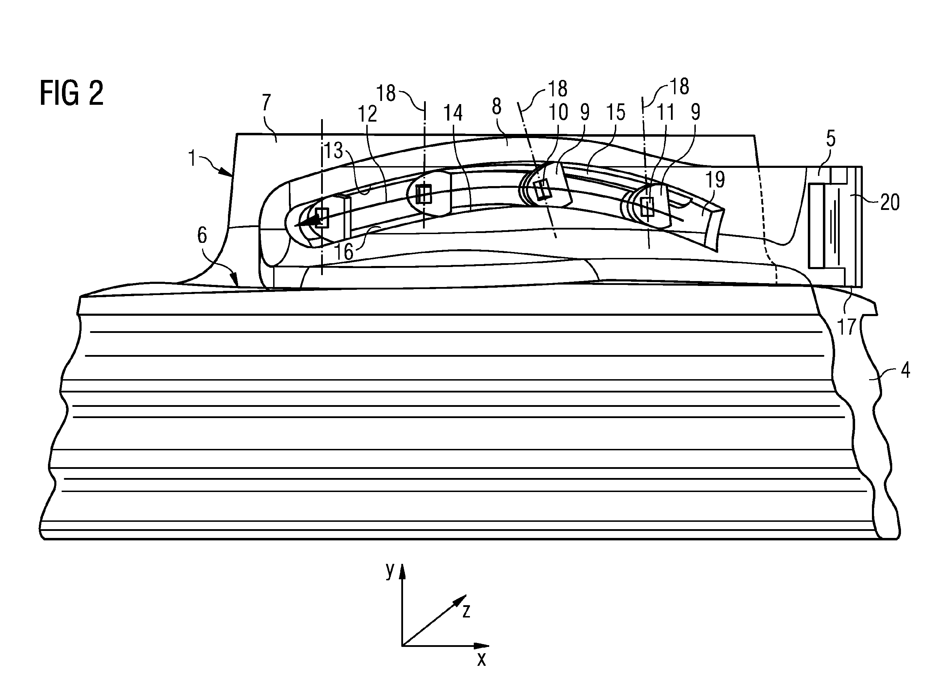

Die Figur 2 zeigt schematisch in teilweise perspektivischer Hinsicht einen Teil einer Dampfturbinenschaufel 1 mit einer erfindungsgemäßen Vorrichtung zur Ultraschallprüfung 5. Die erfindungsgemäße Vorrichtung zur Ultraschallprüfung 5 umfasst eine Unterseite 17, die auf eine zu prüfende Oberfläche 6 einer Dampfturbinenschaufel 1 aufgelegt ist.

Die erfindungsgemäße Vorrichtung zur Ultraschallprüfung 5 umfasst eine Führungseinheit 8 und einen Führungsgriff 20. Mit Hilfe des Führungsgriffes 20 kann das Formstück positioniert werden.

Die Führungseinheit 8 umfasst eine Öffnung 19. Die Öffnung 19 wird begrenzt durch eine obere Führungsschiene 13 und eine untere Führungsschiene 14. Die obere Führungsschiene 13 umfasst ein Führungselement 15. Die untere Führungsschiene 14 umfasst ein Führungselement 16. Innerhalb der Öffnung 19 ist ein Führungsschlitten 9 angeordnet. Der Führungsschlitten 9 ist so ausgestaltet, dass er innerhalb der Öffnung 19 entlang der Führungsschienen 13 und 14 bewegt werden kann. Die Bewegungsrichtung oder Translationsrichtung ist in der Figur 2 durch die Bezugsziffer 12 gekennzeichnet.

In der Figur 2 sind die Führungsschienen 13 und 14 beziehungsweise die Öffnung 19 in Bezug auf die Unterseite 17 gewölbt ausgestaltet, insbesondere in Bezug auf die zu prüfende Oberfläche beziehungsweise die Prüfoberfläche 6 konvex nach außen gewölbt ausgestaltet. Diese Ausgestaltung bewirkt, dass der Führungsschlitten 9 in Bezug auf das in der Figur 2 angegebene Koordinatensystem bei einer Bewegung in x-Richtung zugleich auch in y-Richtung bewegt wird. Alternativ dazu ist auch eine flache Ausgestaltung der Öffnung 19 beziehungsweise der Führungsschienen 13 und 14 möglich. In diesem Fall ließe sich der Führungsschlitten 9 ausschließlich in x-Richtung bewegen.

Der Führungsschlitten 9 umfasst eine Aussparung 10 für einen Ultraschallprüfkopf 11. In die Aussparung 10 kann ein Ultraschallprüfkopf 11 eingesetzt werden. Die Aussparung 10 umfasst eine Achse 18, die mit einer definierten Ausrichtung des Prüfkopfes 11 korrespondiert. Die Position des Ultraschallprüfkopfes 11 und damit die Prüfkopfposition und der Schielwinkel des Ultraschallprüfkopfes 11 in Bezug auf die Prüfoberfläche 6 wird somit durch die Lage des Führungsschlittens 9 in Bezug auf die Prüfoberfläche 6 festgelegt.

Das Führungselement 15 der oberen Führungsschiene 13 und das Führungselement 16 der unteren Führungsschiene 14 sind angepasst an die jeweilige Prüfoberfläche 6 so ausgestaltet, dass der Führungsschlitten 9 im Verlauf der Translationsbewegung 12 zumindest teilweise um eine Achse senkrecht zur jeweiligen Translationsrichtung 12 rotiert. In der Figur 2 rotiert der Führungsschlitten 9 während der Bewegung in x-Richtung beziehungsweise y-Richtung um die z-Achse. Dabei variiert gleichzeitig die Richtung der Längsachse 18 und damit der Einschallwinkel oder Schielwinkel in Bezug auf die Prüfoberfläche 6.

In der Figur 2 ist der Führungsschlitten 9 als Käfig ausgestaltet, in welchem sich der Prüfkopf 11 befindet. Der Führungsschlitten 9 oder Käfig wird über zwei unabhängige, entlang der Prüfoberfläche 6 dreidimensional verformte Bahnen 13 und 14 geführt. Die untere Führungsschiene oder Bahn 14 definiert dabei die Position des Prüfkopfes 11 auf der Oberfläche 6. Die obere Bahn oder Führungsschiene 13 ist etwas größer ausgespart und definiert durch einen Lageunterschied zur ersten Bahn oder ersten Führungsschiene 14 den Schielwinkel des Prüfkopfes 11. Die Führungselemente 15 und 16 greifen in korrespondierende Aussparungen an dem Führungsschlitten 9 oder Käfig ein und realisieren den jeweiligen Schielwinkel. Das Führungselement 15 läuft dem Führungselement 16 in Bewegungsrichtung 12 nach und kann daher den gesamten Führungsschlitten 9 oder Käfig verdrehen (schielen).

Mit Hilfe der vorliegenden Erfindung ist es möglich, durch richtige Anordnung zweier dreidimensional angeordneter Bahnen oder Führungsschienen 13 und 14 sowohl die Prüfkopfposition als auch den Schielwinkel eines Ultraschallprüfkopfes 11 wegabhängig entlang einer Bahn geführt zu verstellen. Dadurch wird die Prüfung komplexer Bauteile wie beispielsweise die Prüfung von Dampfturbinenschaufelfüßen, deutlich einfacher, empfindlicher und erheblich schneller als es bislang möglich war.

## Patentansprüche

1. Vorrichtung zur Ultraschallprüfung (5) eines Bauteils (1), die mindestens einen Ultraschallprüfkopf (11) und eine Führungseinheit (8) umfasst,
**dadurch gekennzeichnet, dass**
die Führungseinheit (8) so ausgestaltet ist, dass der Prüfkopf (11) in mindestens einer Translationsrichtung (12) kontinuierlich bewegt werden kann,
wobei sich gleichzeitig kontinuierlich der Schielwinkel des Prüfkopfes (11) in Bezug auf die Oberfläche (6) des Bauteils (1) verändert.

2. Vorrichtung zur Ultraschallprüfung (5) nach Anspruch 1, **dadurch gekennzeichnet, dass**
die Führungseinheit (8) mindestens eine Führungsschiene (13, 14) umfasst, an welcher der Prüfkopf (11) kontinuierlich entlang bewegt werden kann.

3. Vorrichtung zur Ultraschallprüfung (5) nach Anspruch 1 oder 2,
**dadurch gekennzeichnet, dass**
die Führungseinheit (8) mindestens einen Führungsschlitten (9) umfasst, an welchem der Prüfkopf (11) befestigt werden kann.

4. Vorrichtung zur Ultraschallprüfung (5) nach Anspruch 3, **dadurch gekennzeichnet, dass**
die Führungseinheit (8) so ausgestaltet ist, dass der Prüfkopf (11) mit Hilfe des Führungsschlittens (9) an der Führungsschiene (13, 14) entlang geführt werden kann.

5. Vorrichtung zur Ultraschallprüfung (5) nach einem der Ansprüche 1 bis 4,
**dadurch gekennzeichnet, dass**
die Führungseinheit (8) einen Käfig umfasst, innerhalb welchen der Prüfkopf (11) und/oder der Führungsschlitten (9) bewegt werden können/kann.

6. Vorrichtung zur Ultraschallprüfung (5) nach einem der Ansprüche 1 bis 5,
**dadurch gekennzeichnet, dass**
die Führungseinheit (8) ein erstes Führungselement (15, 16), mit welchem die Position des Prüfkopfes (11) festgelegt werden kann, und ein zweites Führungselement (15, 16), mit welchem der Einschallwinkel des Prüfkopfes (11) festgelegt werden kann, umfasst.

7. Vorrichtung zur Ultraschallprüfung (5) nach einem der Ansprüche 1 bis 6,
**dadurch gekennzeichnet, dass**
die Führungseinheit (8) mindestens eine gekrümmte Führungsschiene (13, 14) und/oder ein gekrümmtes Führungselement (13, 14, 15, 16) umfasst.

8. Verwendung einer Vorrichtung zur Ultraschallprüfung (5) nach einem der Ansprüche 1 bis 7 zur Ultraschallmessung an einer Turbinenkomponente (1).

9. Verwendung einer Vorrichtung zur Ultraschallprüfung (5) nach Anspruch 8,
**dadurch gekennzeichnet, dass**
es sich bei der Turbinenkomponente (1) um eine Dampfturbinenkomponente handelt.

10. Verwendung einer Vorrichtung zur Ultraschallprüfung (5) nach Anspruch 9,
**dadurch gekennzeichnet, dass**
es sich bei der Turbinenkomponente (1) um eine Dampfturbinenschaufel handelt.

11. Verfahren zur Ultraschallprüfung eines Bauteils (1),
**dadurch gekennzeichnet, dass**
ein Ultraschallprüfkopf (11) in mindestens einer Translationsrichtung (12) kontinuierlich bewegt wird und gleichzeitig der Schielwinkel des Prüfkopfes (11) in Bezug auf die Oberfläche (6) des Bauteils (1) kontinuierlich verändert wird.

12. Verfahren nach Anspruch 11,
**dadurch gekennzeichnet, dass**
der Schielwinkel dadurch verändert wird, dass der Prüfkopf (11) um eine Achse senkrecht zur Translationsrichtung (12) gedreht wird.

13. Verfahren nach Anspruch 11 oder 12,
**dadurch gekennzeichnet, dass**
der Prüfkopf (11) mit Hilfe eines Führungsschlittens (9) auf mindestens einer Führungsschiene (13, 14) entlang geführt wird.
